# EUROPÄISCHE PATENTSCHRIFT

(11) **EP 0 545 853 B1**
(45) Veröffentlichungstag und Bekanntmachung des Hinweises auf die Patenterteilung: **10.08.1994**
(21) Anmeldenummer: 92810755.6
(22) Anmeldetag: 06.10.1992
(51) Int. Cl.: A47J 31/40, A47J 31/44

(54) **Kaffeemaschine**
Coffee machine
Machine à café

(30) Priorität: 03.12.1991 DE 4139804
(43) Veröffentlichungstag der Anmeldung: 09.06.1993
(73) Patentinhaber: CIS Elektrogeräte AG, CH-8340 Hinwil (CH)
(72) Erfinder: Aebi, Thomas, CH-8493 Saland (CH)
(74) Vertreter: Rottmann, Maximilian R.

(56) Entgegenhaltungen:
- EP-A- 0 237 399
- DE-A- 3 243 866
- FR-A- 2 326 898
- GB-A- 2 187 937

## Beschreibung

Die vorliegende Erfindung betrifft eine Kaffeemaschine, insbesondere eine Espresso-Kaffeemaschine, wie sie im Oberbegriff des Patentanspruchs 1 beschrieben, und aus dem Dokument EP-A-237399 bekannt ist.

Solche Kaffeemaschinen sind seit längerem bekannt und werden, obwohl sie unter dem Begriff "Espressomaschinen" verkauft werden, sowohl zum Aufbrühen von Espresso-Kaffee als auch zum Aufbrühen von Kaffeewasser für "Kaffee-Crème" eingesetzt. Vollautomatische Kaffeemaschinen der gattungsgemässen Art besitzen im allgemeinen einen Kolbenmotor, welcher einen Kolben zum Verdichten des in der Brühkammer befindlichen Kaffeepulvers antreibt, so dass beim Durchlaufen des Heisswassers durch das verdichtete Kaffeepulver (Aufbrühen) ein aromatisches Kaffeegetränk entsteht, welches den vom Kunden gewünschten Geschmack sowie das berühmte "Schäumli" aufweist.

Da der Kolben in zwei Richtungen bewegt werden muss, einerseits in die eine Richtung zum Verdichten des Kaffeepulvers und andererseits in die entgegengesetzte Richtung, um den Ausstoss des ausgelaugten Kaffeepulvers sowie das Einfüllen des frischen Kaffeepulvers zu ermöglichen, kommt eine aufwendige Mechanik zum Einsatz. Diese Mechanik ist notwendig, um die Drehbewegung des Kolbenmotors in eine Hubbewegung des Kolbens umzusetzen, da die eingesetzten Wechselstrommotoren ohne aufwendige Massnahmen nur in einer Drehrichtung betrieben werden können.

Eine solche Mechanik hat jedoch drei grundlegende Nachteile:
1. Sie verteuert die Kaffeemaschine erheblich.
2. Sie ist störanfällig und unterliegt einem gewissen Verschleiss, so dass dadurch der Wartungsaufwand relativ gross ist.
3. Sie erhöht das Gewicht der Kaffeemaschine.

Aus diesen obenerwähnten Gründen wäre es daher naheliegend, einen Gleichstrommotor, welcher problemlos in zwei Drehrichtungen betrieben weden kann, zum Antrieb des Kolbens einzusetzen. Der Einsatz eines Gleichstrommotors bringt aber wiederum andere Nachteile mit sich:
1. Zum Betrieb eines Gleichstrommotors muss eine Gleichspannung vorhanden sein.
2. Gleichstrommotoren, welche aus preislichen Gründen überhaupt in Frage kommen, weisen im allgemeinen eine Betriebsspannung von weniger als 80 V auf. Daher muss die Netzwechselspannung von z.B. 220 V auf die zum Betrieb des Gleichstrommotors notwendige Spannung transformiert und gleichgerichtet werden. Ein solcher Transformator würde aber die für einen Gleichstrommotor erwähnten Vorteile bezüglich Gewicht und Preis wieder zunichte machen.

Ein weiterer Nachteil von Espresso-Kaffeemaschinen besteht zudem darin, dass das zubereite Kaffeegetränk beim Genuss, insbesondere wenn ein Espresso zubereitet (kleine Menge aufgebrühtes Wasser) und keine vorgewärmte Tasse benutzt wird, meist schon relativ kalt ist.

Es ist daher die Aufgabe der Erfindung, eine gattungsgemässe Kaffeemaschine so weiterzubilden, dass ein Gleichstrommotor zum Antrieb des Kolbens eingesetzt werden kann, der in zwei unterschiedlichen Drehrichtungen betreibbar ist und der ohne aufwendige Schaltung am Netz anschliessbar ist, wobei ferner mit geringem Aufwand eine Heizvorrichtung zur Verfügung gestellt werden soll, mit der Kaffeetassen derart vorgewärmt werden können, dass selbst bei Zubereitung eines "Espresso-Kaffees" letzterer beim Trinken als ausreichend warm empfunden wird.

Gemäss der Erfindung wird diese Aufgabe durch die im kennzeichnenden Teil des Patentanspruchs 1 definierten Merkmale gelöst.

Damit der Anschluss am Netz (Wechselspannung mit 110 oder 220V) ohne aufwendige Schaltung ermöglicht wird, kann ein einen elektrischen Widerstand aufweisender Spannungsteiler mit in Serie geschalteter Diode vorgesehen sein. Vorzugsweise ist der elektrische Widerstand während des Betriebs des Gleichstrom-Kolbenmotors sowohl als Vorwiderstand für diesen Motor, wie auch als Heizelement für eine Heizplatte wirksam.

Gattungsgemässe Espresso-Kaffeemaschinen dieser Art besitzen zur Steuerung im allgemeinen einen in ein Steuergerät integrierten Mikroprozessor. Daher ist es ohne grossen Mehraufwand möglich, den Vorwiderstand über dieses Steuergerät so anzusteuern, dass der Vorwiderstand auch für sich allein, ohne dass der Gleichstrom-Kolbenmotor in Betrieb ist, als Heizelement zum Erwärmen der Heizplatte angesteuert werden kann und dass zudem die Heizleistung variierbar ist.

Dadurch, dass der zum Begrenzen der Spannung eingesetzte Vorwiderstand auch noch als Heizelement für die Heizplatte eingesetzt wird, kann die dabei anfallende Verlustleistung einerseits sinnvoll genutzt werden, und zum anderen erübrigt sich damit ein Thermoblock zum Kühlen dieses Vorwiderstands.

Weiterbildungen und bevorzugte Ausführungsformen des Erfindungsgegenstands sind in den abhängigen Ansprüchen 2 bis 9 beschrieben.

Ein Ausführungsbeispiel des Erfindungsgegenstands wird im folgenden anhand der beiliegenden Zeichnungen näher erläutert. In den Zeichnungen zeigen:
- Fig.1: einen schematischen Längsschnitt durch die erfindungsgemässe Espresso-Kaffeemaschine, um das grundsätzliche Prinzip zu zeigen; und
- Fig.2: ein Prinzip-Schaltbild des elektrischen Schaltschemas.

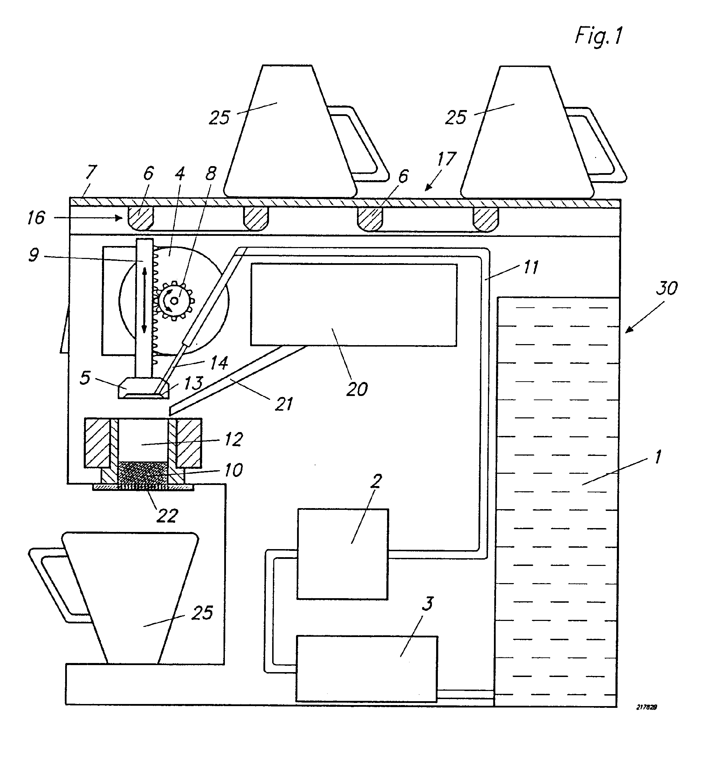

Die in Fig.1 im Längsschnitt schematisch dargestellte Kaffeemaschine weist ein Gehäuse 30, einen Kaltwasserbehälter 1, einen Heisswasserbereiter 2, der in diesem Beispiel als Durchlauferhitzer ausgebildet ist, sowie eine Pumpe 3 zum Fördern des Wassers auf. Der mit 4 bezeichnete Gleichstrom-Kolbenmotor ist mit einem Vorwiderstand 6 in Serie geschaltet, welcher einerseits die anliegende Spannung am Gleichstrom-Kolbenmotor 4 begrenzt sowie andererseits als Heizelement 16 für eine Heizplatte 7 dient. Dieser Gleichstrom-Kolbenmotor 4 treibt über ein Zahnrad 8 eine Zahnstange 9 an, welche an ihrem Ende einen Kolben 5 trägt und welch letzterer das in einer Brühkammer 12 befindliche Kaffeepulver 10 verdichtet. Das gemahlene Kaffeepulver aus dem Vorratsbehälter 20 wird über eine Zuleitung 21 in die Brühkammer 12 zudosiert.

Zum Aufbrühen des Kaffees fährt der Kolben 5 in die Brühkammer 12 soweit ein, dass das Kaffeepulver 10 auf einen vorbestimmten Wert verdichtet wird. Wenn der Kolben 5 dann mit einer definierten Kraft auf dem Kaffeepulver 10 aufliegt, beginnt der eigentliche Brühvorgang. Hierzu wird das unter Druck stehende, erhitzte Wasser 11 über eine Heisswasser-Zuleitung 14 durch den Kolben 5 geführt; dort kann es durch ein am unteren Ende des Kolbens angebrachtes Sieb 13 austreten, um dann anschliessend das Kaffeepulver 10 durchfliessen zu können. Das aufgebrühte Kaffeegetränk tritt schliesslich durch ein am unteren Ende der Brühkammer angebrachtes Kaffeesieb 22 aus und fliesst damit in die Kaffeetasse 25 hinein.

Nach dem Brühvorgang wird das ausgelaugte Kaffeepulver in an sich bekannter, hier aber nicht näher beschriebenen Weise entfernt.

Um die Kaffeetassen 25 möglichst einfach auf eine bestimmte Temperatur zu bringen, wird das Heizelement 16 beim Einschalten der Kaffeemaschine über die Steuerung S1 automatisch aktiviert. Dabei kann davon ausgegangen werden, dass die auf der Heizplatte 7 der Kaffeemaschine liegenden Kaffeetassen 25 bereits wenige Minuten nach dem Einschalten der Kaffeemaschine, auf die gewünschte Temperatur vorgewärmt sind.

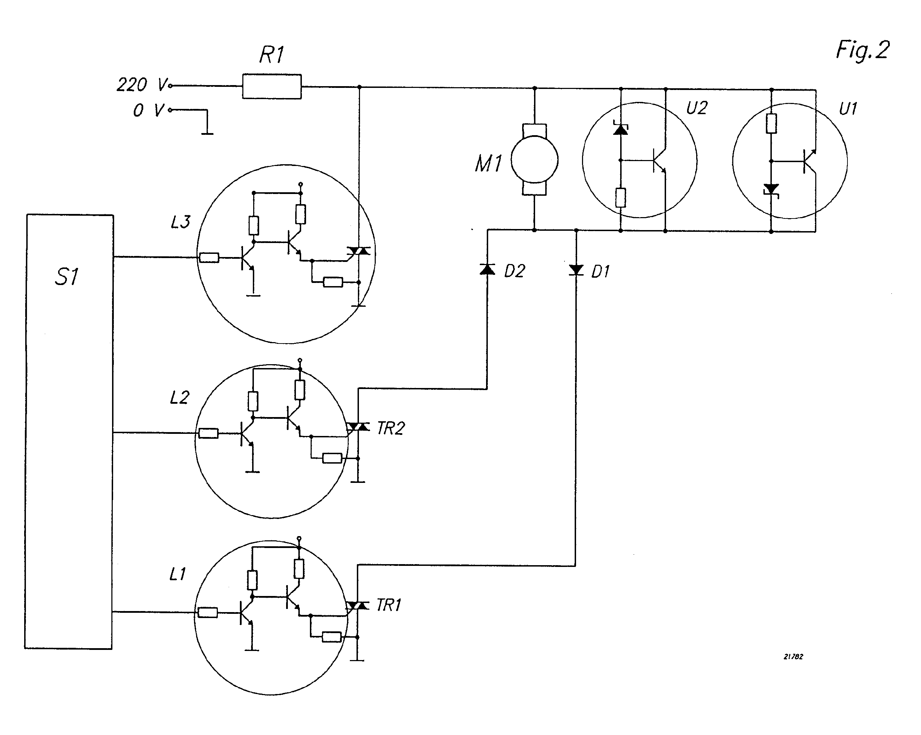

Aus der Fig.2 ist das prinzipielle elektrische Schaltschema zum Ansteuern des Gleichstrom-Kolbenmotors M1 sowie einem in Serie dazu geschalteten, elektrischen Widerstand R1 ersichtlich.

Ein mit S1 bezeichnetes Steuergerät besitzt drei Ausgänge. Am ersten Ausgang ist eine Treiberstufe L1, am zweiten Ausgang eine Treiberstufe L2 und am dritten Ausgang eine Phasenanschnitt- oder Wellenpaketsteuerungs-Schaltung L3 angeschlossen. Der Ausgang der Treiberstufe L1 ist mit einem mit TR1 bezeichneten Triac und, in Serie dazu, einer in Sperrichtung geschalteten Diode D1 verbunden. Der andere Anschluss der Diode D1, die Anode, ist mit dem einen Pol des Motors M1 verbunden. Am Ausgang der Treiberstufe L2 ist ein mit TR2 bezeichneter Triac und, in Serie dazu, eine in Durchlassrichtung geschaltete Diode D2 angeschlossen. Die Kathode der Diode D2 ist mit dem gleichen Pol des Motors M1 wie die Anode der Diode D1 verbunden. Der Ausgang der Phasenanschnitt- oder Wellenpaketsteuerungs-Schaltung L3 schliesslich ist mit dem anderen Pol des Gleichstrom-Kolbenmotors verbunden, an welcher auch der elektrische Widerstand R1 angeschlossen ist. Parallel zum Motor M1 sind, in gegensinniger Schaltung, zwei Überspannungsschutz-Schaltungen U1 und U2 angeschlossen.

Beim Betrieb des Gleichstrom-Kolbenmotors M1 wird die anliegende Netzspannung (220 V) durch den in Serie geschalteten Vorwiderstand R1 begrenzt. Soll nun der Gleichstrom-Kolbenmotor M1 in der einen Drehrichtung, nämlich zum Verschieben des Kolbens 5 (Fig.1) nach unten, angetrieben werden, so wird dieser über die Treiberstufe L1, welche den Triac TR1 zündet, angesteuert. Die Diode D1 ist mit dem Motor M1 sowie dem Triac TR 1 in Serie geschaltet. Dadurch dass die Anode der Diode D1 mit dem Motor M1 verbunden ist, werden die negativen Halbwellen von der Diode D1 gesperrt, so dass nur die positiven Halbwellen der Netzspannung zum Antrieb des Gleichstrom-Kolbenmotors M1 genutzt werden. Dies bedeutet, dass der Gleichstrom-Kolbenmotor M1 nur mit einer Spannung, die eine gleiche (in diesem Fall positive) Polarität aufweist, beaufschlagt wird.

Sinngemäss gilt für die andere Drehrichtung und damit die Verschiebung des Kolbens nach oben natürlich dasselbe, nur dass für die Ansteuerung des Motors M1 in diesem Fall dann die Treiberstufe L2 mit dem Triac TR2 sowie der Diode D2 zum Einsatz kommt. Die Diode D2 weist gegenüber der Diode D1 entgegengesetzte Durchlassrichtung auf, so dass nur die positiven Halbwellen von der Diode D2 gesperrt werden und damit die negativen Halbwellen zum Antrieb des Gleichstrom-Kolbenmotors M1 genutzt werden.

Spannungsspitzen, welche für den Gleichstrom-Kolbenmotor M1 gefährlich sein könnten, werden durch die Überspannungsschutz-Schaltungen U1 und U2, welche parallel zum Motor M1 liegen, abgefangen. Dies gilt sowohl für positive wie auch für negative Halbwellen. Die Glättung dieser Halbwellen erübrigt sich, da der Gleichstrom-Kolbenmotor M1 zusammen mit der Zahnstange 9 (Fig.1) ein relativ grosses Massenträgheitsmoment aufweist, so dass trotz pulsierender, über dem Gleichstrom-Kolbenmotor anliegender Gleichspannung eine kontinuierliche Bewegung des Kolbens entsteht. Die im Vorwiderstand R1 während des Betriebs des Motors M1 in Wärme umgesetzte Leistung wird zum Erwärmen der Heizplatte 7 (Fig.1) verwendet.

Sollen nur die Kaffeetassen vorgewärmt werden, ohne dass der Gleichstrom-Kolbenmotor M1 betrieben wird, so kann der zum Aufheizen der Heizplatte vorgesehene elektrische Widerstand R1, ohne dass der Motor M1 in Betrieb ist, über die Phasenanschnitt- oder Wellenpaketsteuerungs-Schaltung L3 angesteuert werden. Die Regulierung der Leistung zum Vorwärmen der Tassen wird in bekannter, hier aber nicht näher beschriebenen Weise ebenfalls über die Phasenanschnitt- oder Wellenpaketsteuerungs-Schaltung L3 ermöglicht.

Der in den gattungsgemässen Kaffeemaschinen dieser Art vorhandene Mikroprozessor ist in dem Steuergerät S1 untergebracht. Diese Steuerung sorgt dafür, dass nicht sinnvolle oder nicht zulässige Ansteuerungen ausbleiben. So muss sie beispielsweise darauf achten, dass nur jeweils die eine der beiden Treiberstufen L1 oder L2 den Gleichstrom-Elektromotor ansteuert, und dass der Vorwiderstand R1 über die Phasenanschnitt- oder Wellenpaketsteuerungs-Schaltung L3 nicht zusammen mit einer der beiden Treiberstufen L1 oder L2 aktiv ist.

Dadurch dass der Gleichstrom-Kolbenmotor den Hubweg des Kolbens direkt über eine Zahnstange bestimmt, ist es möglich, den Gleichstrom-Kolbenmotor so zu regeln, dass das Kaffeepulver immer schön gleichmässig, unabhängig von der zudosierten Menge, verdichtet wird. Bei den bisher eingesetzten Wechselstrommotoren, die nur eine Drehrichtung aufweisen und über eine aufwendige Mechanik (beispielsweise eine Kurbelwelle) diese Drehbewegung in eine Hubbewegung umsetzen, kann die Verdichtung des Kaffeepulvers nicht in Abhängigkeit von der zudosierten Kaffeemenge variiert werden, da der Hubweg des Kolbens vorbestimmt und konstant ist.

## Patentansprüche

1. Kaffeemaschine, insbesondere Espresso-Kaffeemaschine, welche einen Kaltwasserbehälter (1), eine Pumpe (3) zum Fördern des Wassers, einen Heisswasserbereiter (2), eine Brühkammer (12) zur Aufnahme des Kaffeepulvers (10) sowie einen von einem umschaltbaren Kolben-Motor (4) angetriebenen Kolben (5) zum Verdichten des in der Brühkammer (12) befindlichen Kaffeepulvers (10) aufweist, dadurch gekennzeichnet, dass der Kolben-Motor (4) als mit einer niedrigeren als der Netzspannung betriebener Gleichstrom-Motor (4) ausgebildet und zur Spannungsanpassung mit einem dazu in Serie geschalteten elektrischen Widerstand (6) versehen ist, dass der Kolben-Motor (4) mit Hilfe von Gleichrichterelementen (D1, D2) umschaltbar ist, und dass eine Heizplatte (7) zum Vorwärmen von Tassen oder zur Warmhaltung des Getränks vorgesehen ist, bei welcher der elektrische Widerstand (6) als Heizelement (16) für die Heizplatte (7) dient.

2. Vorrichtung nach Anspruch 1, dadurch gekennzeichnet, dass der elektrische Widerstand (6) auch unabhängig vom Gleichstrom-Kolbenmotor (4) als wirksames Heizelement (16) ansteuerbar ist.

3. Vorrichtung nach Anspruch 1, dadurch gekennzeichnet, dass das Heizelement (16) die Form einer Heizschlange aufweist.

4. Vorrichtung nach Anspruch 1, dadurch gekennzeichnet, dass das Heizelement (16) thermisch mit der Heizplatte (7) gekoppelt ist.

5. Vorrichtung nach Anspruch 4, dadurch gekennzeichnet, dass die Heizplatte (7) zum Vorwärmen von Kaffeetassen (25) dient.

6. Vorrichtung nach Anspruch 5, dadurch gekennzeichnet, dass die Heizplatte (7) als obere Gehäuseabdeckung (17) ausgebildet ist.

7. Vorrichtung nach Anspruch 1, dadurch gekennzeichnet, dass die Heizplatte (7) aus Metall besteht.

8. Vorrichtung nach Anspruch 2, dadurch gekennzeichnet, dass Mittel vorgesehen sind, welche das Heizelement (16) zum Aufheizen der Heizplatte (7) mit dem Einschalten der Kaffeemaschine automatisch aktivieren.

9. Vorrichtung nach den Ansprüchen 2 und 8, dadurch gekennzeichnet, dass die Einschaltdauer und damit die Heizleistung des Heizelements (16) über eine Phasenanschnitt- oder Wellenpaketsteuerung steuerbar ist.

## Claims

1. Coffee machine, in particular expresso coffee machine, which exhibits a cold-water vessel (1), a pump (3) for delivering the water, a hot-water preparer (2), an infusion chamber (12) for receiving the coffee powder (10), and a piston (5) which is driven by a reversible piston motor (4) and is intended for compacting the coffee powder (10) located in the infusion chamber (12), characterized in that the piston motor (4) is configured as a direct-current motor (4) operated by a lower voltage than the supply voltage, and it is provided, for voltage adaptation, with an electric resistor (6) which is connected in series therewith, in that the piston motor (4) can be reversed with the aid of rectifier elements (D1, D2), and in that a heating plate (7) is provided in order to pre-heat cups or to keep the beverage warm, in the case of which the electric resistor (6) serves as a heating element (16) for the heating plate (7).

2. Apparatus according to Claim 1, characterized in that the electric resistor (6) can also be activated as an effective heating element (16) independently of the direct-current piston motor (4).

3. Apparatus according to Claim 1, characterized in that the heating element (16) is in the form of a heating coil.

4. Apparatus according to Claim 1, characterized in that the heating element (16) is thermally coupled to the heating plate (7).

5. Apparatus according to Claim 4, characterized in that the heating plate (7) serves to pre-heat coffee cups (25).

6. Apparatus according to Claim 5, characterized in that the heating plate (7) is configured as a top housing covering (17).

7. Apparatus according to Claim 1, characterized in that the heating plate (7) consists of metal.

8. Apparatus according to Claim 2, characterized in that means are provided which automatically activate the heating element (16) for heating up the heating plate (7) when the coffee machine is switched on.

9. Apparatus according to Claims 2 and 8, characterized in that the switching-on period, and thus the heating capacity of the heating element (16), can be controlled by phase control or wave-packet control.

## Revendications

1. Machine à café, en particulier machine à café expresso, laquelle comprend un récipient à eau froide (1), une pompe (3) pour extraire l'eau, un préparateur d'eau chaude (2), une chambre d'ébouillantage (12) pour recevoir la poudre de café (10), ainsi qu'un piston (5) actionné par un moteur de piston réversible (4) pour compacter la poudre de café qui se trouve dans la chambre d'ébouillantage (12), caractérisée en ce que le moteur de piston est réalisé sous la forme d'un moteur à courant continu (4) alimenté avec une tension inférieure à la tension du secteur et est muni d'une résistance électrique (6) montée en série pour l'adaptation de tension, en ce que le moteur de piston (4) peut être inversé à l'aide d'éléments redresseurs de courant (D1, D2), et en ce qu'une plaque chauffante (7) est prévue pour préchauffer des tasses ou garder la boisson au chaud, la résistance électrique (6) servant d'élément chauffant (16) pour la plaque chauffante (7).

2. Dispositif selon la revendication 1, caractérisé en ce que la résistance électrique (6) peut aussi être commandée comme élément chauffant efficace (16) indépendamment du moteur de piston à courant continu (4).

3. Dispositif selon la revendication 1, caractérisé en ce que l'élément chauffant (16) a la forme d'un serpentin chauffant.

4. Dispositif selon la revendication 1, caractérisé en ce que l'élément chauffant (16) est couplé thermiquement à la plaque chauffante (7).

5. Dispositif selon la revendication 4, caractérisé en ce que la plaque chauffante (7) sert à préchauffer des tasses à café.

6. Dispositif selon la revendication 5, caractérisé en ce que la plaque chauffante (7) est réalisée sous la forme d'un capot supérieur de boîtier (17).

7. Dispositif selon la revendication 1, caractérisé en ce que la plaque chauffante (7) est en métal.

8. Dispositif selon la revendication 2, caractérisé en ce que des moyens sont prévus pour activer automatiquement l'élément chauffant (16) afin de chauffer la plaque chauffante (7) lors de la mise en marche de la machine à café.

9. Dispositif selon les revendications 2 et 8, caractérisé en ce que la durée de mise en circuit et donc la puissance de chauffage de l'élément chauffant (16) peuvent être commandées par coupe de phase ou par paquet d'ondes.
